# EUROPEAN PATENT APPLICATION

(11) **EP 4 694 530 A1**
(43) Date of publication of application: **11.02.2026**
(21) Application number: 23932049.2
(22) Date of filing: 06.04.2023
(51) Int. Cl.: H04W 74/08, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/014285
(87) International publication number: WO 2024/209638

(57) **Abstract**

A terminal according to one aspect of the present disclosure includes a receiving section that receives a downlink control channel supporting triggering of a random access preamble (PRACH) for a plurality of candidate cells, and a control section that judges, based on the downlink control channel, one or more candidate cells for which transmission of the PRACH is performed. The plurality of candidate cells include a first candidate cell with monitoring of a response signal (RAR) to the PRACH and a second candidate cell without monitoring of an RAR to the PRACH. The control section performs control to perform a separate operation in a case of parallel random access procedures, based on a number of the first candidate cells possible to be indicated by one downlink control channel being the downlink control channel.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)). It is also assumed that, in inter-cell mobility, a candidate cell is configured separately from a serving cell, and switching/switch between the serving cell and the candidate cell is performed.

Meanwhile, in a case of applying inter-cell mobility (for example, switching between a serving cell and a candidate cell and the like), how to control UL transmission (for example, control of timing advance and the like) poses a problem. For example, it is assumed that, as timing advance acquisition methods, a random access procedure with random access response (RAR) and a random access procedure without RAR are supported.

Meanwhile, a control method (for example, UE operation) in a case where the random access procedure with random access response (RAR) and the random access procedure without RAR are supported remains unclear. Unless the random access procedure is performed appropriately, inter-cell mobility cannot be performed appropriately, which may degrade communication quality.

The present disclosure has been made in view of this respect, and has an object to provide a terminal, a radio communication method, and a base station that can appropriately control communication even when inter-cell mobility using a random access procedure is performed.

### Solution to Problem

A terminal according to one aspect of the present disclosure includes a receiving section that receives a downlink control channel supporting triggering of a random access preamble (PRACH) for a plurality of candidate cells, and a control section that judges, based on the downlink control channel, one or more candidate cells for which transmission of the PRACH is performed. The plurality of candidate cells include a first candidate cell with monitoring of a response signal (RAR) to the PRACH and a second candidate cell without monitoring of an RAR to the PRACH. The control section performs control to perform a separate operation in a case of parallel random access procedures, based on a number of the first candidate cells possible to be indicated by one downlink control channel being the downlink control channel. Advantageous Effects of Invention

According to one aspect of the present disclosure, even when inter-cell mobility using a random access procedure is performed, communication can be appropriately controlled.

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of association between a serving cell and a candidate cell.
[FIG. 3] FIG. 3A is a diagram to show a second example of option 2 for candidate cell configuration. FIG. 3B is a diagram to show a third example of option 2 for the candidate cell configuration.
[FIG. 4] FIG. 4 is a diagram to show example 1 of serving cell switching.
[FIG. 5] FIG. 5 is a diagram to show example 2 of the serving cell switching.
[FIG. 6] FIG. 6 is a diagram to show example 3 of the serving cell switching.
[FIG. 7] FIG. 7 is a diagram to show an example of timing advance groups (TAGs) to which cells included in a cell group belong.
[FIG. 8] FIG. 8 is a diagram to show an example of a MAC CE for timing advance command.
[FIG. 9] FIG. 9 is a diagram to show another example of the MAC CE for timing advance command.
[FIG. 10] FIG. 10 is a diagram to show an example of configuration of TAGs when association of TAG IDs with candidate cells is supported.
[FIG. 11] FIG. 11 is a diagram to show an outline of L1L2-triggered mobility (LTM).
[FIG. 12] FIG. 12 is a diagram to show a PDCCH indication-based RACH (PDCCH ordered RACH) with random access response (RAR) monitoring for serving cell.
[FIG. 13] FIG. 13 is a diagram to show a PDCCH indication-based RACH (PDCCH ordered RACH) without random access response (RAR) monitoring for serving cell.
[FIG. 14] FIGS. 14A and 14B are diagrams to show examples of a DCI field used to notify cell identification information.
[FIG. 15] FIGS. 15A and 15B are diagrams to show examples of candidate cells indicated by DCI according to a first embodiment.
[FIG. 16] FIG. 16 is a diagram to show another example of the candidate cells indicated by DCI according to the first embodiment.
[FIG. 17] FIGS. 17A to 17C are diagrams to show examples of candidate cells indicated by DCI (bitmap) according to the first embodiment.
[FIG. 18] FIG. 18 is a diagram to show an example of a control method in a case of occurrence of a plurality of RA procedures according to a second embodiment.
[FIG. 19] FIG. 19 is a diagram to show another example of the control method in the case of occurrence of a plurality of RA procedures according to the second embodiment.
[FIG. 20] FIG. 20 is a diagram to show another example of the control method in the case of occurrence of a plurality of RA procedures according to the second embodiment.
[FIG. 21] FIG. 21 is a diagram to show an example of a schematic structure of a radio communication system according to one embodiment.
[FIG. 22] FIG. 22 is a diagram to show an example of a structure of a base station according to one embodiment.
[FIG. 23] FIG. 23 is a diagram to show an example of a structure of a user terminal according to one embodiment.
[FIG. 24] FIG. 24 is a diagram to show an example of a hardware structure of the base station and the user terminal according to one embodiment.
[FIG. 25] FIG. 25 is a diagram to show an example of a vehicle according to one embodiment.

### Description of Embodiments

### (TCI, Spatial Relation, QCL)

For NR, control of reception processing (for example, at least one of reception, de-mapping, demodulation, or decoding) and transmission processing (for example, at least one of transmission, mapping, precoding, modulation, or coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, or a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) or a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), or an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), or the like.

The SSB is a signal block including at least one of a primary synchronization signal (PSS), a secondary synchronization signal (SSS), or a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

As described above, it is studied that the UE performs UL transmission to one or a plurality of cells/TRPs. As a procedure in this case, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to, for example, inter-cell mobility for multi-TRP, but may be a scenario not corresponding to inter-cell mobility for multi-TRP.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

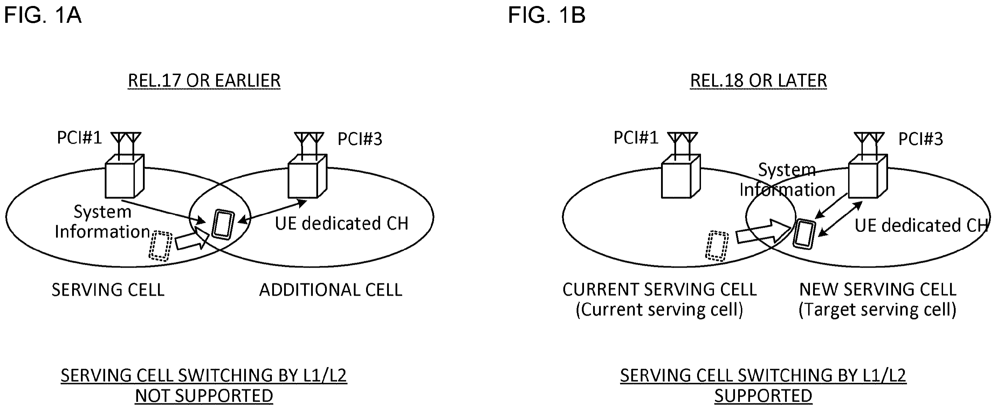

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message). When the UE moves out of coverage of the serving cell, switching of cells is required through handover (also referred to as L3 mobility) or the like.

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a preconfiguration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2 (for example, DCI/MAC CE). The UE can receive/transmit a UE-dedicated channel/common channel from/to a new serving cell (or a target serving cell). The UE may go out of the coverage of the current serving cell.

### (Configuration of Plurality of Candidate Cells)

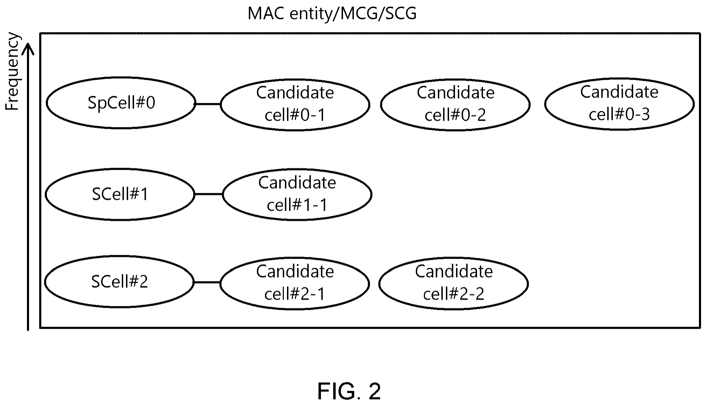

FIG. 2 is a diagram to show an example of association between the serving cell and a candidate cell. Assume that SpCell #0, SCell #1, or SCell #2 is the serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and #2-2. In this manner, one or more candidate cells (candidate serving cells) may be associated with the serving cell.

For configuration of cells as candidates (candidate cells) in a case where the serving cell is changed, options 1 and 2 below are considered, for example.

### <Option 1>

As in inter-cell mobility of Rel. 17, information in ServingCellConfig may include information related to a plurality of candidate cells. This case requires that the plurality of candidate cells share the same configuration of a PDCCH/PDSCH/UL or the like as that for the serving cell.

For example, in the inter-cell mobility of Rel. 17, "mimoParam-r17" is added below ServingCellConfig to add PCI configuration information. mimoParam-r17 may include additionalPCI-ToAddModList-r17 as an information list of additional SSBs having PCIs different from a PCI of the serving cell. The same configuration as that for the serving cell may be applied to the candidate cells (additional cells, cells with additionalPCI), except for some information.

### <Option 2>

A plurality of candidate cells may be provided with a full configuration (for example, ServingCellConfig) corresponding to the respective cells, and may be associated with each serving cell by reusing a carrier aggregation (CA) configuration framework. In other words, the candidate cells may not share configuration information with the serving cell, and may be provided with another configuration. The UE is provided with a full configuration for the respective candidate cells, and thus can perform appropriate communication with the candidate cell.

The CA configuration framework can configure an SpCell and add a plurality of SCells, for each cell group. Reusing the CA framework may configure a serving cell and configure a plurality of candidate cells, for each cell group for L1/L2 inter-cell mobility. The candidate cells may be activated/deactivated by a MAC CE. The MAC CE may activate/deactivate TCI information corresponding to the candidate cells to activate/deactivate the candidate cells. It is considered that this method is beneficial for reducing complexity of UE operation.

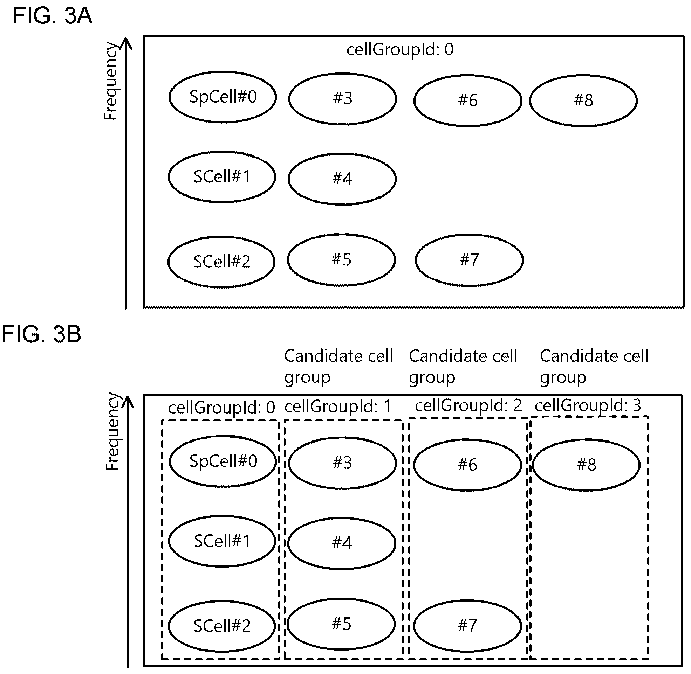

FIG. 3A is a diagram to show a first example of option 2 for the candidate cell configuration. In the example of FIG. 3A, a common candidate cell pool for cell switching in an MCG/SCG is applied to candidate cells. In other words, the candidate cells are handled as one pool (group) irrespective of a frequency band.

FIG. 3B is a diagram to show a second example of option 2 for the candidate cell configuration. In the example of FIG. 3B, a plurality of cell groups are configured, and cell group switching can be performed by L1/L2 signaling. Candidate cell(s) is configured for each cell group, and a configuration of each group includes indices of corresponding SpCell and SCell.

### (Signaling for Serving Cell Change Indication)

Implicit or explicit signaling for serving cell change indication will be described.

### {Aspect 1}

In Aspect 1, implicit signaling for serving cell change indication will be described.

### {{Option 1-1}}

When a specific control resource set (CORESET) (for example, at least one of CORESET #0, a CORESET with a CH5 Type 0-CSS, or a CORESET with a CH6/CH7/CH8 CSS) is indicated (activated) by a MAC CE, together with one or more TCI states associated with a cell with a PCI different from a PCI of a serving cell (when, for the specific CORESET, one or more TCI states associated with a cell with a PCI different from the PCI of the serving cell are indicated/activated by the MAC CE), the UE may judge to change the serving cell to another cell (cell x, cell having a different PCI). In other words, this activation may implicitly indicate that the serving cell is changed to another cell.

In this case, the UE may update, to the same TCI state as the above-described activated TCI state, a beam for another CORESET ID, another CORESET using CH6/CH7/CH8, or another CORESET using a CSS.

### {{Option 1-2}}

In a case where, when the MAC CE activates/deactivates PDSCH TCI states, all the TCI states activated by the MAC CE are associated with same cell x having a PCI different from the PCI of the serving cell, the UE may judge to change the serving cell to another cell (cell x). In other words, this association may implicitly indicate that the serving cell is changed to another cell.

In a case where this option is applied, when a NW (base station) changes no serving cell, it is necessary that, when the MAC CE activates PDSCH TCI states associated with a cell having a different PCI, a TCI state associated with another cell (for example, a current serving cell or a cell having a second different PCI) be also included in the activation.

### {{Option 1-3}}

In a case where the MAC CE activates/deactivates unified TCI states (corresponding to a unified TCI framework of Rel. 17, for example) and where all the activated unified TCI states are associated with same cell x having a different PCI, the UE may judge to change the serving cell to another cell (cell x). In other words, this association may implicitly indicate that the serving cell is changed to another cell.

### {Aspect 2}

In Aspect 2, explicit signaling for serving cell change indication will be described. Scenario 2 described above is applied to Aspect 2, for example.

### {{Option 2-1}}

An example of the serving cell change indication will be described below. Note that activation/deactivation of a non-serving cell, change of a serving cell, and transmission/reception to/from another cell (non-serving cell) having a physical cell ID different from a physical cell ID of a serving cell may be interchangeably interpreted.

The UE may receive a new MAC CE used for activation/deactivation of a non-serving cell and including at least one of fields (information) indicating (1) to (3) below corresponding to a non-serving cell. The UE may, when receiving the MAC CE, judge to change the serving cell to another cell (non-serving cell). The UE may control, based on the information, DL/UL signal transmission and reception to and from the non-serving cell. Note that the non-serving cell may be one or a plurality of non-serving cells. In the example to be described below, a MAC CE including a plurality of fields indicating a plurality of non-serving cell indices is applied.
(1) Serving cell ID
(2) BWP ID
(3) Non-serving cell ID used for activation The non-serving cell ID may be replaced with any information (with which the non-serving cell can be identified) corresponding to the non-serving cell.

As an example of (3), any one of (3-1) to (3-5) may be applied, for example.
(3-1) PCI (PCI to be directly used) For example, 10 bits are used.
(3-2) Re-indexing index (new ID) of non-serving cell The new ID may be associated with part of the PCI, and may be configured only for a serving cell and a non-serving cell used by (available to) the UE. The new ID can reduce the number of bits more than the PCI does.
(3-3) CSI report configuration ID (CSI-ReportConfigId) (when CSI-ReportConfig corresponds to one or a plurality of non-serving cells)
(3-4) CSI resource configuration ID (CSI-ResourceConfigId) (when CSI-ResourceConfigId corresponds to one or a plurality of non-serving cells)
(3-5) Bitmap indicating activation/deactivation of each non-serving cell A size (the number of bits) of the bitmap may be the same as the number of non-serving cells configured in this CC. For example, when the second non-serving cell of three non-serving cells is activated, "010" is configured.

At least one piece of the information included in the MAC CE may be included in DCI. Alternatively, at least one of serving cells activated by the MAC CE may be indicated by the DCI. The MAC CE/DCI may include a field indicating a TCI state/SSB/CSI-RS from a cell having a different PCI, so that the UE can recognize, in a target cell (serving cell after change), a DL beam to be monitored. By using the TCI state / SSB / CSI-RS, the UE may create a beam report (CSI report) and transmit the created report.

### {{Option 2-2}}

The UE may receive a MAC CE obtained by adding a new 1-bit field "C" to an existing MAC CE. The field indicates whether change of a serving cell is performed. The UE may receive the MAC CE, and may judge, based on the field, whether to change the serving cell to another cell.

### {{Option 2-3}}

For the MAC CE in option 2-2, the MAC CE may further include a field indicating a serving cell index / PCI / another ID (the above-described new ID of option 2-1 or the like), or a field for a TCI state / SSB / CSI-RS for a target cell (serving cell after change).

In this manner, indication for serving cell change indication is indicated by a MAC CE/DCI, thereby allowing the UE to appropriately change a serving cell.

### {Example 1 of Serving Cell Switching}

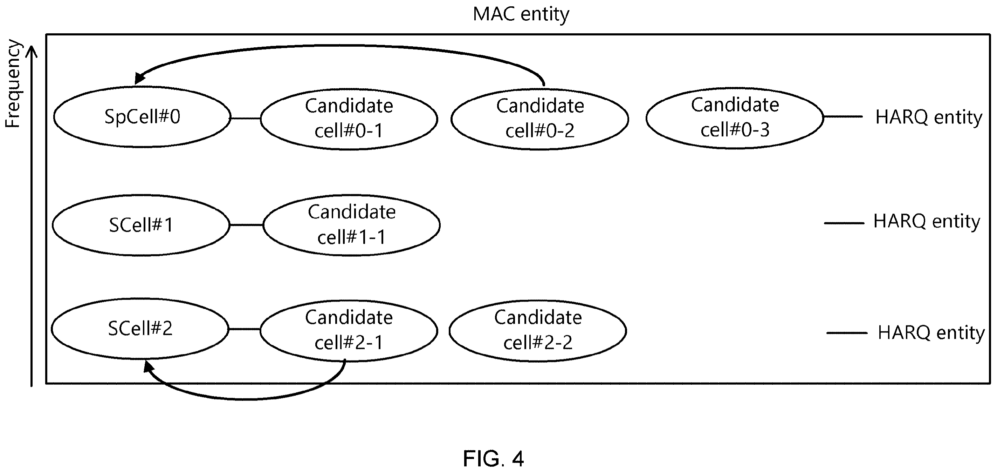

FIG. 4 is a diagram to show example 1 of the serving cell switching. For example, when L1/L2 signaling indicates, in a serving cell "SpCell #0" in an MCG/SCG, that the serving cell is changed to candidate cell #0-2, candidate cell #0-2 becomes a new serving cell "SpCell #0." For example, when L1/L2 signaling indicates, in a serving cell "SCell #2" in an MCG/SCG, that the serving cell is changed to candidate cell #2-1, candidate cell #2-1 becomes a new serving cell "SCell #2."

### {Example 2 of Serving Cell Switching}

RRC/MAC CE can configure a global candidate cell ID (cell #0, ..., 5) for each cell group, band, FR, or UE. The global candidate cell ID may indicate serving cell switching to the UE.

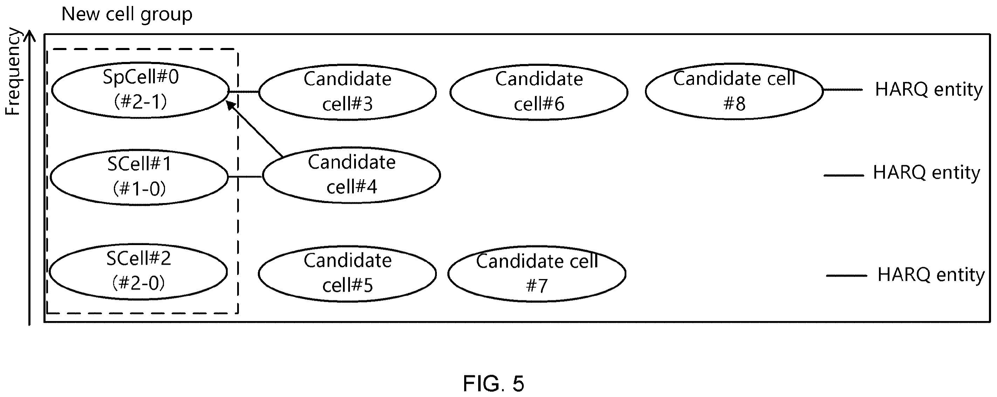

FIG. 5 is a diagram to show example 2 of the serving cell switching. As in FIG. 3A, a pool of a plurality of candidate cells can be configured, and L1/L2 signaling can switch a serving cell to any (activated) candidate cell in the pool. In this case, the configured candidate cell can become either an SpCell or an SCell, based on the L1/L2 signaling.

The UE may receive an indication of serving cell change (from cell #2-1 to candidate cell 4) via a MAC CE/DCI. Indicated candidate cell #4 becomes an SpCell in a new cell group.

### {Example 3 of Serving Cell Switching}

RRC/MAC CE can configure a global candidate cell ID (cell #0-1, #0-1, ..., 2-2) for each cell group, band, FR, or UE. The global candidate cell ID may indicate serving cell switching to the UE.

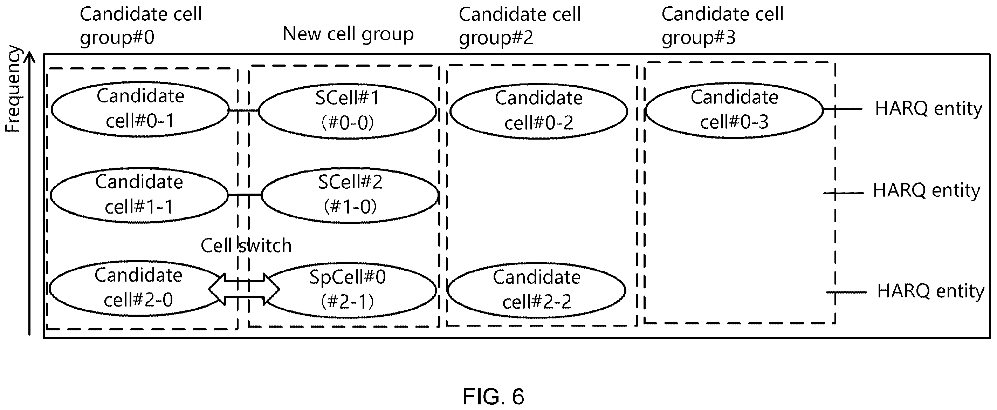

FIG. 6 is a diagram to show example 3 of the serving cell switching. The UE receives an indication of serving cell change (from cell #2-0 to cell #2-1) via a MAC CE/DCI. Indicated cell #2-1 becomes an SpCell in a new cell group. Cells (cell #0-0, cell #1-0) in the same cell group as that for indicated cell #2-1 become Scell #1 and Scell #2. In other words, a serving cell group is switched.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

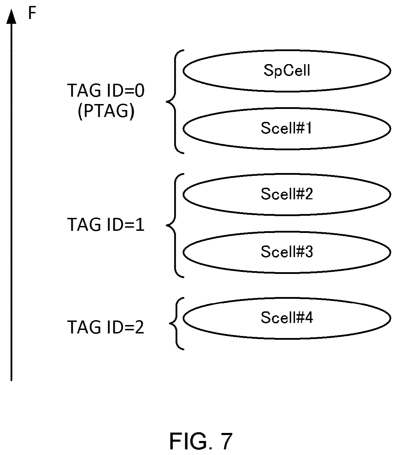

In existing systems (for example, Rel-16 NR), configuration of four TAGs at maximum (for example, MCG/SCG) is supported for each cell group (see FIG. 7). FIG. 7 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command (TAC) is signaled from a radio base station to the UE on a MAC layer. The UE controls a certain timer (for example, a TA timer), based on reception of the TA command.

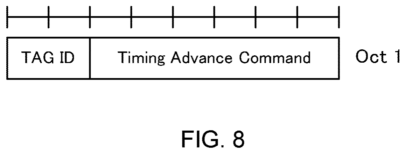

A MAC CE for timing advance command may have a structure including a field for timing advance group index (for example, TAG ID) and a field for timing advance command (see FIG. 8). The MAC CE may be formed by 1 octet (= 8 bits).

The field for TAG ID (TAG ID field) may be formed, for example, by 2 bits. The TAG ID field may be used for indication of the TAG ID of an addressed TAG. The field for timing advance command (TAC field) may be formed, for example, by 6 bits. The TAC field may indicate an index value T_{A} (0, 1, 2, ..., 63) to be used for control of the amount/value (relative amount/value) of timing adjustment to be applied by the MAC entity. The MAC CE for timing advance command shown in FIG. 8 may be referred to as a TAC MAC CE.

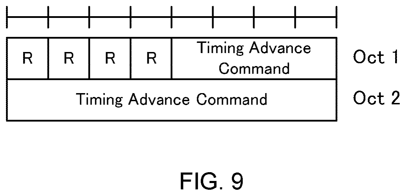

FIG. 9 is a diagram to show another example of the MAC CE for timing advance command. The MAC CE shown in FIG. 9 may be referred to as an absolute TAC MAC CE. The MAC CE may be formed by 2 octets (= 16 bits). Specifically, the MAC CE may include a field for reserve bit (R bit field) and a field for timing advance command (TAC field). The R bit field (R = 0) may be formed, for example, by 4 bits. The TAC field may be formed over 2 octets, for example, by 12 octets. The TAC field of FIG. 9 may indicate an index value to be used for control of the amount/value (absolute amount/value) of actual TA to be applied by the MAC entity, in a manner similar to that of FIG. 8. The absolute TAC MAC CE may not include the TAG ID field shown in FIG. 8.

The MAC CE shown in FIG. 8 may be used after initial access is established. On the other hand, the MAC CE shown in FIG. 9 may be used only in initial access, and may be included in an RAR or the like. The respective fields included in the MAC CE for timing advance command described above may be referred to as TA-related fields. Among them, the TAC field shown in FIG. 8 and the TAC field shown in FIG. 9 may be referred to as a TA adjustment field / field for indicating TA adjustment / field related to TA adjustment and an absolute TAC field / field for indicating an absolute TAC, respectively.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

### (UL Transmission Control Based on Timing Advance)

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a certain cell (or CC). Alternatively, a case is assumed that different TRPs corresponding to a certain cell share a common TAG.

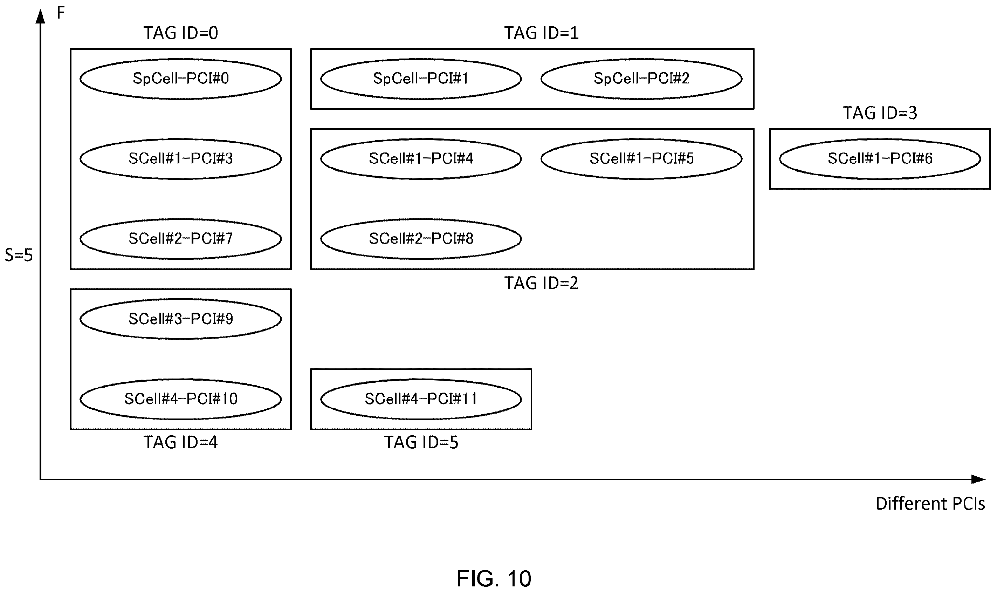

FIG. 10 is a diagram to show an example of configuration of TAGs each being for a plurality of cells (or TRPs) having different PCIs.

It is also assumed that M PCIs (for example, a serving cell + candidate cells associated with the serving cell) is configurable at maximum per CC and that configuration of N TAG(s) (for example, N ≤ M) at maximum is supported for the maximum M PCIs. In this case, one or a plurality of PCIs may be associated with one TAG.

For up to S serving cell(s) (or for S serving cell(s) at maximum) in a cell group, one or a plurality of PCIs may be associated with one TAG. In this case, T TAG(s) at maximum may be configured in consideration of one PCI per CC (case 1). In other words, (T × N) TAG(s) at maximum may be configured for the max (M × S) cells. Alternatively, up to U TAG(s) at maximum may be configured for the max (M × S) cells (case 2).

Thus, when candidate cells are configured/applied/supported, it is assumed that different serving cells/different candidate cells are associated with the same TAG. The TAG for the candidate cells may be indicated by the base station, or may be judged based on a TA for the candidate cells acquired by the UE.

It is also conceivable that the UE performs, for UL transmission for candidate cells (for example, candidate cells with indication of switching to a serving cell), UL transmission in consideration of a TA corresponding to the candidate cells. When considering the TA for the candidate cells, the UE is required to perform TA acquisition for the candidate cells (for example, TA acquisition of candidate cells).

As the TA acquisition for the candidate cells, a plurality of TA acquisition methods, such as TA acquisition using a RACH (for example, RACH-based solutions) and TA acquisition without using a RACH (RACH-less solutions), are conceivable. The TA acquisition methods may be interpreted as TA acquisition schemes, TA acquisition types, or TA acquisition procedures. In the present disclosure, TA acquisition, TA measurement, TA calculation, TA computation, and TA determination may be interchangeably interpreted.

For example, the UE may acquire a TA for a candidate cell by transmitting, to the candidate cell, a RACH (for example, a PDCCH ordered RACH) indicated/triggered by a PDCCH. Information (for example, a TA value) related to the TA for the candidate cell may be included in a response signal of the RACH (for example, RAR). The RAR may be transmitted from a serving cell or a candidate cell. Alternatively, a TA for a candidate cell may be acquired by using a RACH triggered by the UE or a RACH triggered from a network via a higher layer. The PDCCH order may be triggered by only a source cell (or serving cell).

Alternatively, the UE may acquire a TA for a candidate cell by transmitting, to the candidate cell, a signal other than a RACH. Information (for example, a TA value) related to the TA for the candidate cell may be indicated from the base station to the UE. As the signal other than the RACH, an SRS may be applied (SRS based TA measurement), for example.

Alternatively, the UE may measure/calculate/acquire a TA for a candidate cell, based on a DL signal (for example, a downlink reference signal) transmitted from each cell (for example, candidate cell/serving cell). The method in which the UE acquires a TA for a candidate cell, based on a DL signal transmitted from one or more cells, may be referred to as UE based TA measurement.

In the UE based TA measurement, the downlink reference signal may be a certain DL signal (for example, a synchronization signal block (for example, SSB)/CSI-RS or the like). For example, the UE may measure a difference between timings of DL signal receptions from a plurality of cells (or two cells) to obtain a TA for a candidate cell.

The plurality of cells may include a cell (for example, a serving cell) to be a reference. In this case, the UE may calculate a TA necessary for the candidate cell, based on a reception timing in a reference cell (and a TA value for the reference cell) and a timing difference between the reference cell and the candidate cell (for example, T). The UE may acquire a TA for the candidate cell by using a timing advance command (TAC) transmitted from a serving cell.

### (Outline of L1L2-triggered mobility (LTM))

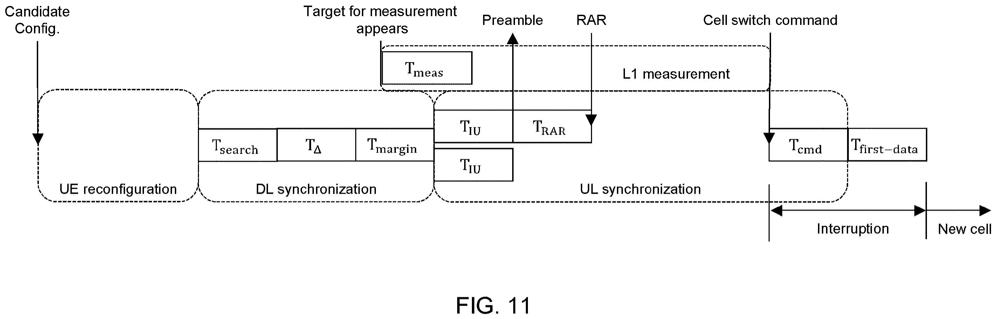

FIG. 11 is a diagram to show an outline of L1L2-triggered mobility (LTM). LTM and L1/L2 inter-cell mobility may be interchangeably interpreted. The UE receives, from the NW, candidate cell configurations in UE reconfiguration. The UE reconfiguration includes T_{RRC}, T_{processing1}/T_{processing2}. T_{RRC} (for example, up to 10 ms) is processing time for RRC reconfiguration that delivers candidate cell configurations (candidate configurations) . T_{processing1}/T_{processing2} (for example, up to 20 ms for the same FR, up to 40 ms for different FRs) are time for respective UE processings before and after a cell switch command. This may include, for some cases, L2/3 reconfiguration, RF re-tuning, baseband re-tuning, security update, if necessary, and the like.

DL synchronization includes T_{search}, T_{Δ}, and T_{margin}. T_{search} (for example, 0 ms in a case where a cell is known, up to 60 ms in a case where a cell is unknown) is time necessary for a target cell search. T_{Δ} is time for fine tracking and all timing information acquisition. T_{margin} (for example, up to 2 ms) is time for postprocessing of an SSB and a CSI-RS.

L1 measurement includes Tₘₑₐₛ (SMTC periodicity, (for example, 20 ms)). Tₘₑₐₛ is measurement latency from the appearance of a target to a cell switch command.

UL synchronization includes T_{IU}, T_{RAR}, and T_{cmd}. T_{IU} (for example, up to 15 ms) is time for uncertain interruption in acquisition of the first available PRACH occasion in a new cell. T_{RAR} (for example, up to 4 ms) is time for RAR latency. T_{cmd} (for example, up to 5 ms) is time for processing of L1/L2 command (HARQ and paging).

T_{first-data} after T_{cmd} is time for the UE to perform, after an RAR, the first DL reception/UL transmission on an indicated beam of a target cell.

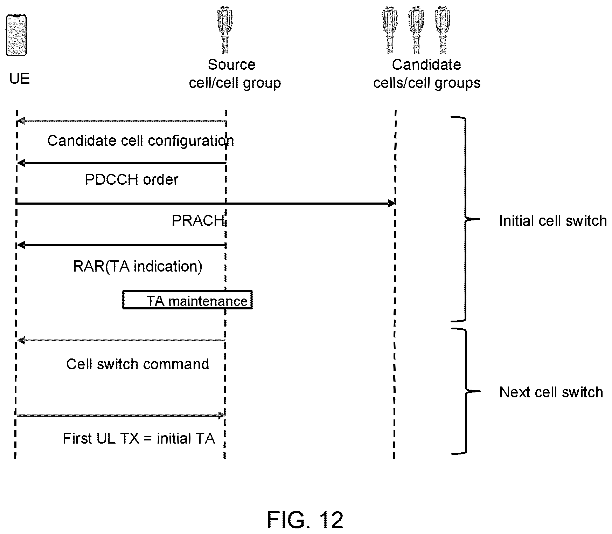

FIG. 12 is a diagram to show an example of a PDCCH orderbased RACH (PDCCH ordered RACH) with RAR monitoring. Note that, in the present disclosure, a source cell and a source cell group may be interchangeably interpreted. A candidate cell and a candidate cell group may be interchangeably interpreted.

The source cell may transmit, to the UE, information related to configuration of a candidate cell (for example, candidate cell configuration information). The source cell may transmit, to the UE, a PDCCH order (for example, DCI format 1_0) used to trigger a PRACH. The PDCCH order (or DCI) may indicate a candidate cell (for example, one candidate cell) / random access occasion (RO) as a target of a PRACH trigger/transmission. The UE transmits, based on the PDCCH order, a PRACH in a RACH procedure to the candidate cell, for TAG/TA acquisition.

Next, the source cell transmits, to the UE, a response signal (RAR) to the PRACH. The RAR may include information related to a TA (for example, TA indication). The RAR (for example, a PDSCH including the RAR / PDCCH for scheduling the PDSCH) may be monitored in a specific search space (for example, a common search space (CSS)) of a specific cell (for example, an SpCell) among current serving cells (only in a Distributed Unit (DU)). In the source cell, TA adjustment (for example, TA maintenance) is performed.

Next, the source cell may transmit a cell switch command to the UE. TA information may be moved/notified from the source cell to a target cell. The UE may control, based on the acquired TA, UL transmission after cell switching. For example, the UE may perform the first UL transmission by using an initial TA in a case where UL synchronization of all candidate cells is not completed after an initial cell switch.

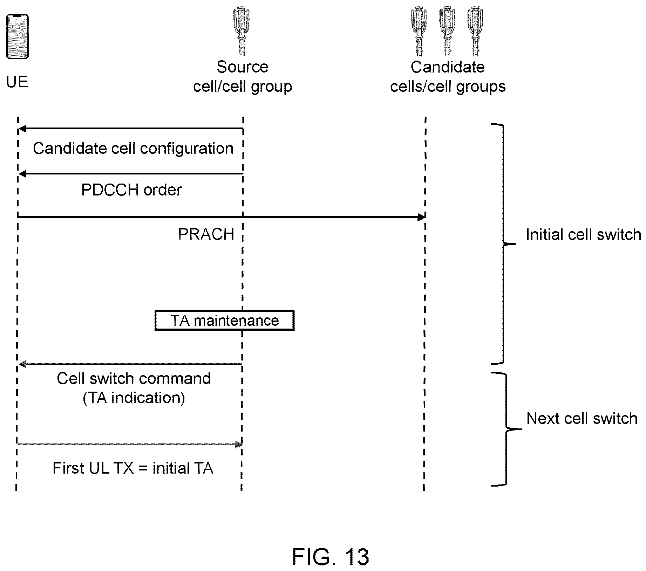

FIG. 13 is a diagram to show an example of a PDCCH orderbased RACH (PDCCH ordered RACH) without RAR monitoring. Only the difference between FIG. 13 and FIG. 12 will be described.

In the example of FIG. 13, a PDCCH order used to trigger a PRAH may indicate one or more candidate cells (for example, a plurality of candidate cells) / random access occasions as a target of a PRACH trigger/transmission. The UE may transmit, based on the PDCCH order, a PRACH in a RACH procedure to the candidate cells, for acquisition of a plurality of TAGs/TAs. The source cell does not transmit a response signal (for example, RAR) to the PRACH. The source cell may indicate, to the UE, information related to a TA (for example, TA indication) by using a cell switch command.

Whether RAR monitoring/reception is necessary for each candidate cell / a plurality of candidate cells / all candidate cells may be configured by a higher layer parameter.

In the present disclosure, a RACH without an RAR may be interpreted as a RACH without RAR monitoring. A RACH may be interpreted as PRACH transmission triggered by a PDCCH order. RACH procedure/PRACH transmission without RAR monitoring may be interpreted as RACH procedure/PRACH transmission not requiring RAR monitoring, or RACH procedure/PRACH transmission in which RAR monitoring is not requested.

### (PDCCH Order)

An example of UE operation in a case where the network (for example, the base station) transmits a PDCCH order requesting PRACH transmission will be described.

### <Option 1>

The UE may judge, based on a certain parameter used for a PDCCH with a PDCCH order, a cell to which the PDCCH order (or a PRACH transmitted in response to the PDCCH order) corresponds. The certain parameter may be, for example, a TCI state.

For example, when the base station transmits a PDCCH order for a PRACH, and a PDCCH (or DCI/CORESET) is associated with a TCI state from a non-serving cell, the PRACH requested by the PDCCH order may correspond to the non-serving cell. In this case, the UE may control PRACH transmission, based on a PRACH configuration for the non-serving cell. Subsequently, the UE may judge a TA for the non-serving cell, based on DL transmission (for example, RAR) fed back for the PRACH transmission.

When the PDCCH (or DCI/CORESET) is associated with a TCI state from a serving cell, the PRACH requested by the PDCCH order may correspond to the serving cell. In this case, the UE may control PRACH transmission, based on a PRACH configuration for the serving cell. Subsequently, the UE may judge a TA for the serving cell, based on DL transmission (for example, RAR) fed back for the PRACH transmission.

### <Option 2>

The UE may judge, based on DCI (or a CORESET) used for a PDCCH order, a cell to which the PDCCH order (or a PRACH transmitted in response to the PDCCH order) corresponds.

For example, the UE may be notified of the DCI used for the PDCCH order including identification information (for example, a cell index / cell type (for example, serving cell/non-serving cell)) on the cell to which the PRACH corresponds. In a certain DCI format used for the PDCCH order (for example, DCI format 1_0), to explicitly indicate a serving cell/non-serving cell to which the PRACH corresponds, X reserved bits of DCI may be used to notify the cell. The reserved bits may be reserved bits included in DCI format 1_0 in an existing system (for example, Rel. 15/16).

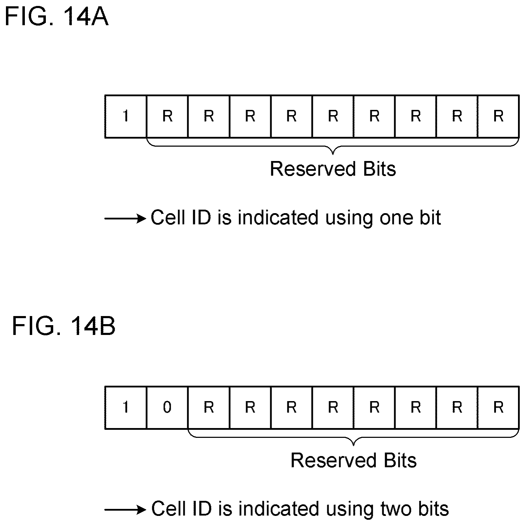

A bit size of X may be configured/judged/determined based on the number of configured non-serving cells. For example, X may be 1 bit when one non-serving cell is configured (see FIG. 14A). In this case, '0' and '1' may indicate a serving cell and a non-serving cell, respectively. The most significant bit (MSB) or least significant bit (LSB) of reserved bits may be applied to a field used to notify the cell identification information.

X may be 2 bits when three non-serving cells are configured (see FIG. 14B). To indicate the non-serving cell, a re-indexing non-serving cell index may be applied. Association between the cell index and a bit value (or a codepoint) may be defined in a specification or may be configured by higher layer signaling or the like. For example, a codepoint '0' or '00' may indicate a serving cell, and remaining bits may be associated in order (for example, increasing/decreasing order) of indices of the configured non-serving cells.

Alternatively, the size of X may be fixed, and the number of bits may not be changed, irrespective of the number of configured non-serving cells. In this case, an unused bit/field may be configured as a reserved bit.

### <Option 3>

In a case where a random access preamble index (for example, ra-PreambleIndex) is a certain value (for example, 0 to 63), part of a preamble may be configured/activated to be associated with a non-serving cell, by RRC/MAC CE.

In this case, a certain field of a certain DCI format (for example, DCI format 1_0) may indicate information on a serving cell/non-serving cell. The certain field may be, for example, a random access preamble index field. Note that the preamble configuration associated with the non-serving cell may be applied to only PRACH transmission based on a PDCCH order (or may not be applied to contention-based PRACH transmission).

When DCI indicates a preamble associated with a non-serving cell, the UE may perform control so as to perform PRACH transmission with the indicated preamble in accordance with a RACH configuration for the non-serving cell.

The UE may adjust a TA for indicated one or more cells after a PRACH based on the PDCCH order. Information related to the TA may be received via a response signal (for example, RAR) to the PRACH transmission.

### (Analysis)

As described above, it is assumed that, in LTM, one PDCCH order (DCI) indicates a plurality of candidate cell IDs and one or a plurality of RO indications / preamble indications / SSBs for a PRACH.

On the other hand, it is also assumed that, in LTM, a RACH without RAR monitoring is supported. It is also considered that PRACH transmission without RAR monitoring is not referred to as an RA procedure, as in an existing system. For a PRACH without RAR monitoring, a rule to be applied in a case with RAR monitoring is not applied.

For example, in a case where an ongoing RA procedure is present in a MAC entity, when RA without RAR monitoring is triggered (for example, triggered by a PDCCH order), the UE continues the ongoing procedure, thereby enabling PRACH transmission without RAR monitoring to be performed. When the UE has received a new PDCCH order for PRACH transmission immediately after a previous PDCCH order for PRACH transmission (even before the UE transmits a PRACH in response to the previous PDCCH order, or even when two PDCCH orders indicate the same preamble, mask index, and UL carrier), the UE can also transmit two PRACHs in accordance with the two PDCCH orders.

It is also assumed that, in a case where one PDCCH order (DCI) for triggering/indicating a plurality of candidate cells is supported, some restrictions are provided for the triggered/indicated plurality of candidate cells, in consideration of RAR reception / RAR monitoring configuration. Meanwhile, studies have not sufficiently been made on how to configure/control candidate cells triggered/indicated by the PDCCH order (DCI). Unless configuration of candidate cells triggered/indicated by the PDCCH order (DCI) is performed appropriately, inter-cell mobility cannot be performed appropriately, which may degrade communication quality.

Thus, the inventors of the present invention studied candidate cells triggered/indicated by a PDCCH order (DCI) (for example, candidate cells with/without RAR reception), and came up with the idea of the present embodiment. The inventors of the present invention studied parallel RA procedures for candidate cells triggered/indicated by a PDCCH order (DCI), and came up with the idea of another example of the present embodiment.

Embodiments according to the present disclosure will be described in detail with reference to the drawings as follows. Note that the aspects (for example, cases) below may each be employed individually, or may be employed in combination of at least two.

### (Various Interpretations and so on)

In the present disclosure, "A/B" and "at least one of A or B" may be interchangeably interpreted. In the present disclosure, "A/B/C" may mean "at least one of A, B, or C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the following embodiments, a "plurality of" and "two" may be interchangeably interpreted. A "TAG" and a "TAG ID" may be interchangeably interpreted. A "cell," a "CC," and a "carrier" may be interchangeably interpreted. In the following embodiments, "calculation," "computation," and "acquisition" may be interchangeably interpreted.

The following description may be applied in inter-cell mobility (for example, L1/L2 inter cell mobility) or may be applied in communication control other than inter-cell mobility. L1/L2 inter-cell mobility may be interpreted as at least one of cell switching, cell switch, or cell change.

### (Radio Communication Method)

### <First Embodiment>

A first embodiment relates to an example of candidate cells triggered/indicated by a PDCCH order (or DCI) in consideration of RAR reception/monitoring configuration.

When one or more candidate cells (or a plurality of candidate cells) being triggered/indicated by one PDCCH order (or DCI) are supported or when one or more candidate cells (or a plurality of candidate cells) are configured to be triggered/indicated by one PDCCH order (or DCI), at least one of options 1-1 to 1-8 below may be applied. The PDCCH order (or DCI) may be interpreted as PDCCH order DCI.

### {Option 1-1}

The plurality of candidate cells triggered/indicated by one PDCCH order (or piece of DCI) may be restricted to candidate cells configured with non-RAR reception.

The candidate cells configured with non-RAR reception may be interpreted as candidate cells without RAR, candidate cells applied/configured with a RACH without RAR, or candidate cells applied/configured with a RACH without RAR monitoring. In the present disclosure, candidate cells configured with RAR reception/non-RAR reception may be interpreted as candidate cells with RAR, candidate cells with RAR reception/non-RAR reception, or candidate cells with RAR monitoring/non-RAR monitoring.

For one candidate cell configured with RAR reception/monitoring, one PDCCH order (or piece of DCI) may be able to trigger only a PRACH for one cell. In this case, individual/separate PDCCH orders (or pieces of DCI) may be applied to a candidate cell configured with RAR reception and a candidate cell configured with non-RAR reception.

For a candidate cell configured with RAR reception, one PDCCH order (or piece of DCI) can trigger only a PRACH for one cell. For a candidate cell configured with non-RAR reception, a PDCCH order (or DCI) may support triggering of a PRACH for a plurality of cells.

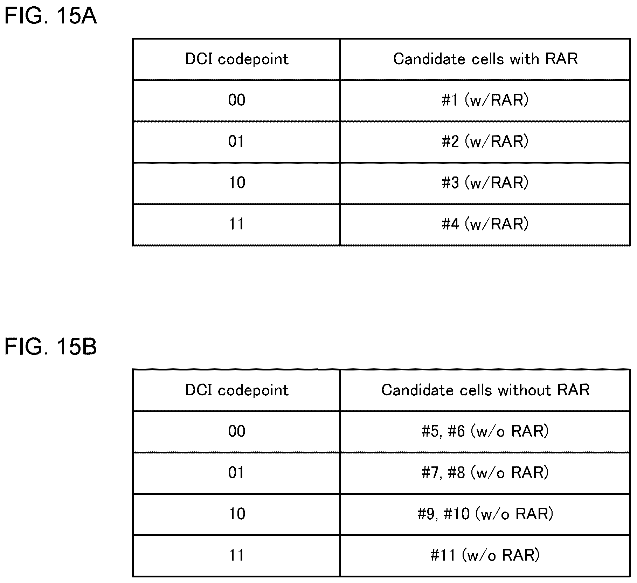

For example, when which candidate cell the PRACH is to be transmitted to is indicated by using a bit (for example, a reserved bit) of a PDCCH order (or DCI), a codepoint used for candidate cell indication in PDCCH order DCI for non-RAR reception may include only a candidate cell configured with non-RAR reception. In this case, a PDCCH order for a candidate cell configured with non-RAR reception may be distinguished from a PDCCH order for a candidate cell configured with RAR reception (see FIGS. 15A and 15B).

FIG. 15A shows an example of candidate cells indicated by codepoints of PDCCH order DCI corresponding to candidate cells (or indicating candidate cells) configured with RAR reception. Each DCI codepoint may be associated with one candidate cell configured with RAR reception.

FIG. 15B shows an example of candidate cells indicated by codepoints of PDCCH order DCI corresponding to candidate cells (or indicating candidate cells) configured with non-RAR reception. Each DCI codepoint may be associated with one or more (or a plurality of) candidate cells configured with non-RAR reception.

In this manner, a plurality of associations between a codepoint of PDCCH order DCI and candidate cells configured with non-RAR reception may be supported, and one association between a codepoint of PDCCH order DCI and a candidate cell configured with RAR reception may be performed.

The association between each codepoint and the candidate cell may be configured by a higher layer parameter or may be defined in a specification.

To distinguish a PDCCH order for a candidate cell configured with non-RAR reception from a PDCCH order for a candidate cell configured with RAR reception, indication by a 1-bit field (for example, a reserved bit field) of DCI or implicit indication (for example, indication of whether the DCI is DCI for RAR reception or DCI for non-RAR reception) may be applied.

A field size of the PDCCH order DCI indicating a candidate cell configured with RAR reception may be configured to be the same as a field size of the PDCCH order DCI indicating a candidate cell configured with non-RAR reception. In this case, the field size of each PDCCH order DCI may be configured to be variable, based on one of the number (for example, a maximum number) of candidate cells configured with RAR reception or the number (for example, a maximum number) of candidate cells configured with non-RAR reception (for example, the larger maximum number). Alternatively, the field size of each PDCCH order DCI may be fixed irrespective of the number of candidate cells configured with RAR reception / number of candidate cells configured with non-RAR reception.

Alternatively, a field size of the PDCCH order DCI indicating a candidate cell configured with RAR reception and a field size of the PDCCH order DCI indicating a candidate cell configured with non-RAR reception may be configured separately (for example, configured to be different from each other, based on the number of candidate cells for RAR reception and candidate cells for non-RAR reception). Each size of a field used for candidate cell indication in each PDCCH order DCI may be configured to be variable, based on the number (for example, a maximum number) of candidate cells configured with RAR reception / number (for example, a maximum number) of candidate cells configured with non-RAR reception. Alternatively, each size may be fixed irrespective of the number of candidate cells configured with RAR reception / number of candidate cells configured with non-RAR reception.

When a field size of the PDCCH order DCI indicating a candidate cell configured with RAR reception and a field size of the PDCCH order DCI indicating a candidate cell configured with non-RAR reception are configured separately, these sizes may be configured so that an overall size of DCI is the same (for example, configured by addition of a padding bit, or the like).

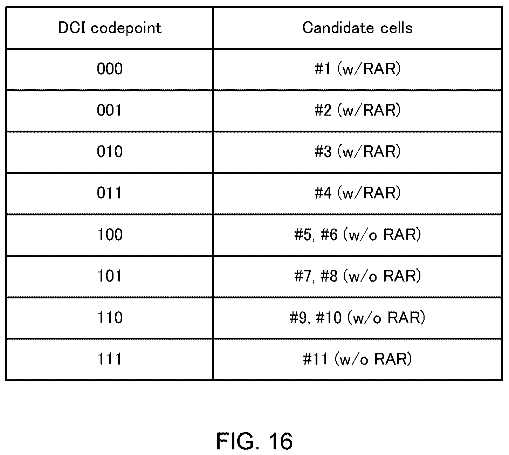

A PDCCH order for a candidate cell configured with non-RAR reception may not be distinguished from a PDCCH order for a candidate cell configured with RAR reception. For example, a candidate cell configured with non-RAR reception and a candidate cell configured with RAR reception may be indicated by using different respective codepoints of the same PDCCH order (or DCI) (see FIG. 16).

FIG. 16 shows a case where some codepoints (here, 000, 001, 010, and 011) are each associated with one candidate cell configured with RAR reception, and remaining codepoints (here, 100, 101, 110, and 111) are each associated with one or more (or a plurality of) candidate cells configured with non-RAR reception.

FIG. 16 shows a case where the number of codepoints indicating candidate cells configured with RAR reception is the same as the number of codepoints indicating candidate cells configured with non-RAR reception, but is not limited to this. The number of codepoints indicating candidate cells configured with RAR reception may be configured to be greater than the number of codepoints indicating candidate cells configured with non-RAR reception. Alternatively, the number of codepoints indicating candidate cells configured with non-RAR reception may be configured to be greater than the number of codepoints indicating candidate cells configured with RAR reception.

The association between each codepoint and the candidate cell may be configured by a higher layer parameter or may be defined in a specification.

In this manner, codepoints (or the number of codepoints) corresponding to candidate cells configured with RAR reception and codepoints (or the number of codepoints) corresponding to candidate cells configured with non-RAR reception can be flexibly configured for one piece of DCI, thereby enabling candidate cell indication to be flexibly controlled.

A size of a field of the DCI used for candidate cell indication may be variable, based on the number (for example, a maximum number) of candidate cells configured with RAR reception / number (for example, a maximum number) of candidate cells configured with non-RAR reception. Alternatively, the size may be fixed irrespective of the number of candidate cells configured with RAR reception / number of candidate cells configured with non-RAR reception.

### {Option 1-2}

The plurality of candidate cells triggered/indicated by one PDCCH order (or piece of DCI) may be allowed to include up to one candidate cell configured with RAR reception, and another candidate cell may be a candidate cell configured with non-RAR reception.

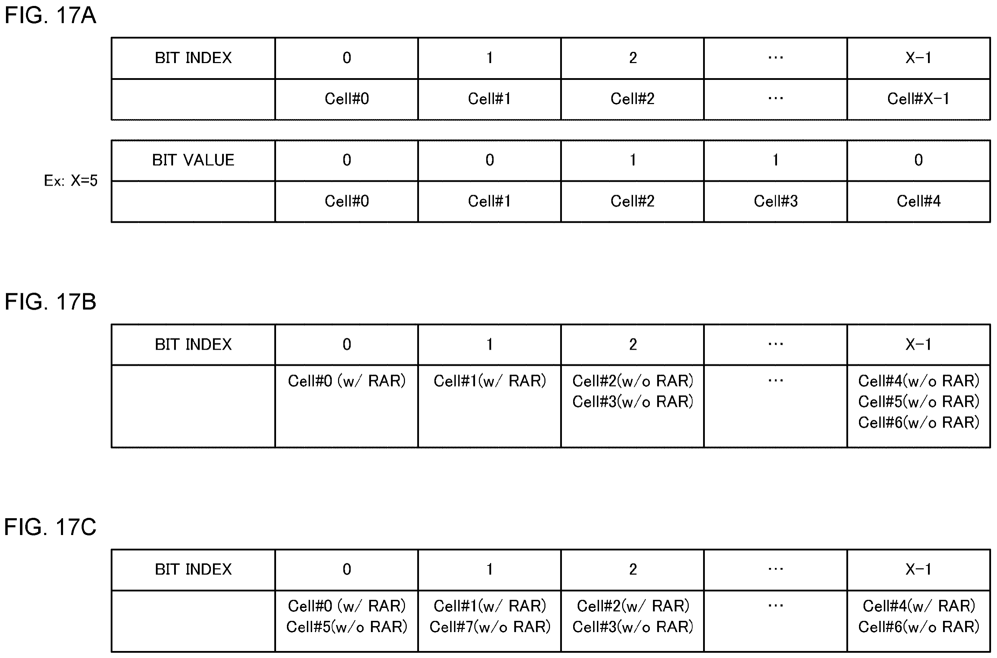

For example, (up to one / one or zero) candidate cell(s) configured with RAR reception and (one or more) candidate cell(s) configured with non-RAR reception may be triggered/indicated by using a bitmap format (see FIGS. 17A to 17C).

FIGS. 17A to 17C show examples of a case where the PDCCH order indicates candidate cells by using a bitmap. In the bitmap, a certain bit (for example, X bits) may be applied. A value (for example, X) of the certain bit may be configured by a higher layer parameter, may be indicated by a MAC CE/DCI, may be determined based on a UE capability, or may be defined in a specification. A reserved bit/new field of the DCI may be applied to the X bits.

FIG. 17A shows an example of a case where X corresponds to the number of candidate cells. FIG. 17A shows an example of candidate cell indication by a bitmap in a case where the number of candidate cells is 5 (or X = 5). Respective bit indices 0 to X-1 may correspond to cells #0 to #X-1, respectively, and a candidate cell to be triggered/indicated may be selected based on a bit value (0 or 1). FIG. 17A shows a case where triggering/transmission of a PRACH is indicated for cells #2 and #3 with a bit value of 1.

FIG. 17A shows a case where bit indices and cell IDs are associated with / mapped to each other such that the cell IDs are arranged in ascending order for the bit indices, but the mapping method is not limited to this. The mapping may be performed such that the cell IDs are arranged in descending order for the bit indices, or non-consecutive cell IDs may be mapped to the bit indices.

In a case where a candidate cell is indicated by using the bitmap of FIG. 17A, candidate cells may not be distinguished based on the presence or absence of RAR reception. In this case, the indication by the bitmap may be performed such that, on the network side, the number of candidate cells configured with RAR reception and the number of candidate cells configured with non-RAR reception are set to up to 1 and 1 or greater, respectively.

FIG. 17B shows an example of a case where X is greater than the number of candidate cells configured with RAR reception. In this case, one or more candidate cells may correspond / be mapped to each bit index, and a plurality of candidate cells (for example, candidate cells configured with non-RAR reception) may correspond / be mapped to a certain bit index.

Different respective bit indices may be used for a candidate cell configured with RAR reception and a candidate cell configured with non-RAR reception. For the candidate cell configured with RAR reception, only one candidate cell is allocated to one bit (or one bit index). For the candidate cell configured with non-RAR reception, one or more (or a plurality of) candidate cells may be allocated to one bit (or one bit index).

FIG. 17B shows a case where X = 5, a total number of candidate cells possible to be triggered/indicated is 7, and the number of candidate cells configured with RAR reception is 2 (the number of candidate cells configured with non-RAR reception is 5). In this case, only one candidate cell configured with RAR reception is allocated to one bit (or bit index), and a total of two bits (or bit indices) are used for candidate cells configured with RAR reception. Candidate cells configured with non-RAR reception are allocated to remaining bits (or bit indices). One or a plurality of candidate cells configured with non-RAR reception are allocated to one bit (or bit index)

FIG. 17B shows a case where one candidate cell configured with RAR reception is allocated to each of bit indices 0 and 1, and one or more candidate cells configured with non-RAR reception are allocated to each of remaining bit indices 2 to X-1.

FIG. 17C shows an example of a case where X is less than or equal to the number of candidate cells configured with RAR reception (or is the same as the number of candidate cells configured with RAR reception). In this case, at least one candidate cell configured with RAR reception may always be allocated to each bit index (or all bit indices). One or more candidate cells configured with non-RAR reception may be allocated to each bit index.

In other words, a combination of at least one candidate cell configured with RAR reception and one or more candidate cells configured with non-RAR reception may be allocated to each bit index. FIG. 17C shows a case where a combination of one candidate cell configured with RAR reception and one candidate cell configured with non-RAR reception is allocated to each bit index.

The candidate cells allocated to the bitmap (or respective bit indices) may be configured by a higher layer parameter, may be indicated by a MAC CE/DCI, or may be defined in a specification.

Note that, when X is less than the number of candidate cells configured with RAR reception, a plurality of candidate cells configured with RAR reception may be allocated to a certain bit index, or X candidate cells among candidate cells configured with RAR reception (for example, the first to X-th smallest candidate cell IDs) may be selected to be allocated to each bit index.

### {Option 1-3}

The plurality of candidate cells triggered/indicated by one PDCCH order (or piece of DCI) may be any candidate cells configured with RAR reception or non-RAR reception.

### {Option 1-4}

The plurality of candidate cells triggered/indicated by one PDCCH order (or piece of DCI) may all be candidate cells configured with non-RAR reception or candidate cells configured with RAR reception.

### {Option 1-5}

The plurality of candidate cells triggered/indicated by one PDCCH order (or piece of DCI) may be candidate cells corresponding to the same frequency (or configured/applied with the same frequency).

### {Option 1-6}

The plurality of candidate cells triggered/indicated by one PDCCH order (or piece of DCI) may be supported to include candidate cells corresponding to different frequencies (or configured/applied with different frequencies).

### {Option 1-7}

The plurality of candidate cells triggered/indicated by one PDCCH order (or piece of DCI) may be supported to be associated with different TAGs. Different TAs are applied to the plurality of candidate cells triggered/indicated by one PDCCH order (or piece of DCI).

### {Option 1-8}

The plurality of candidate cells triggered/indicated by one PDCCH order (or piece of DCI) may include a serving cell. The serving cell may be a cell configured as a serving cell, or may not be limited to a cell configured as a serving cell, and may be a candidate cell that can serve as a serving cell (for example, a candidate cell that can serve as a serving cell in response to cell switching).

### {Option 1-9}

The plurality of candidate cells triggered/indicated by one PDCCH order (or piece of DCI) may not include a serving cell.

Options 1-1 to 1-9 may each be employed individually, or two or more of options 1-1 to 1-9 may be employed in combination. When two or more of options 1-1 to 1-9 are employed in combination, the combination may be defined in a specification or may be configured by a higher layer parameter.

A maximum number of candidate cells triggered/indicated by one PDCCH order (or piece of DCI) may be restricted to a number (for example, X) configured by RRC. A UE capability related to X may be introduced/reported for each UE / each MAC entity / each frequency.

A UE capability corresponding to each option may be introduced. Whether application of each option is configured/allowed/enabled may be RRC configured or predefined.

### <Second Embodiment>

A second embodiment relates to an example of a control method in a case where parallel RACH procedures are not supported for candidate cells configured with RAR reception.

The second embodiment may be preferably applied in option 1-1/1-2 of the first embodiment. As a matter of course, application of the second embodiment is not limited to this.

In a case where one PDCCH order (or piece of DCI) performs one or less trigger/indication of a candidate cell configured with RAR reception, parallel RACH procedures (for example, RACH procedures with RAR reception) may not be supported for candidate cells configured with RAR reception.

For example, a UE may judge the presence or absence of support of the parallel RACH procedures, based on the number of candidate cells possible to be indicated by one downlink control channel (for example, candidate cells with RAR reception). In other words, the UE may perform control so as to perform a separate operation in a case of parallel random access procedures, based on the number of candidate cells possible to be indicated by one downlink control channel (for example, candidate cells with RAR reception).

The presence or absence (or enabling/disabling) of support/application of the parallel RACH procedures may be configured/indicated by higher layer signaling / MAC CE / DCI or may be defined in a specification.

In a case where parallel RACH procedures (for example, RACH procedures with RAR reception) are not supported for candidate cells configured with RAR reception, UE operation may be controlled based on at least one of options 2-1 to 2-3 below.

### {Option 2-1}

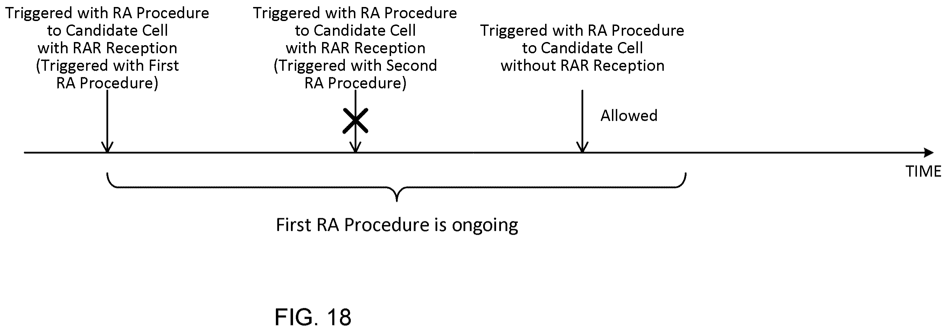

When an ongoing RA procedure is already present for a candidate cell/serving cell configured with RAR reception, the UE may not expect/assume that a new RA procedure for a candidate cell/serving cell configured with RAR reception is triggered (see FIG. 18). Note that triggering of a new RA procedure for a candidate cell configured with non-RAR reception may be allowed.

FIG. 18 shows a case where a first RA procedure (for example, a PRACH) is triggered for a candidate cell/serving cell configured with RAR reception, and control is performed so that a new RA procedure (second RA procedure) for a candidate cell/serving cell configured with RAR reception is not triggered during a period in which the first RA procedure is ongoing. On the other hand, during the period in which the first RA procedure is ongoing, triggering of a new RA procedure (third RA procedure) for a candidate cell/serving cell configured with non-RAR reception may be allowed.

This enables RA procedures with RAR reception (for example, a plurality of RAR receptions) to be controlled not to overlap each other, and thus an increase in UE processing load due to complexity of RA procedures can be suppressed.

### {Option 2-2}

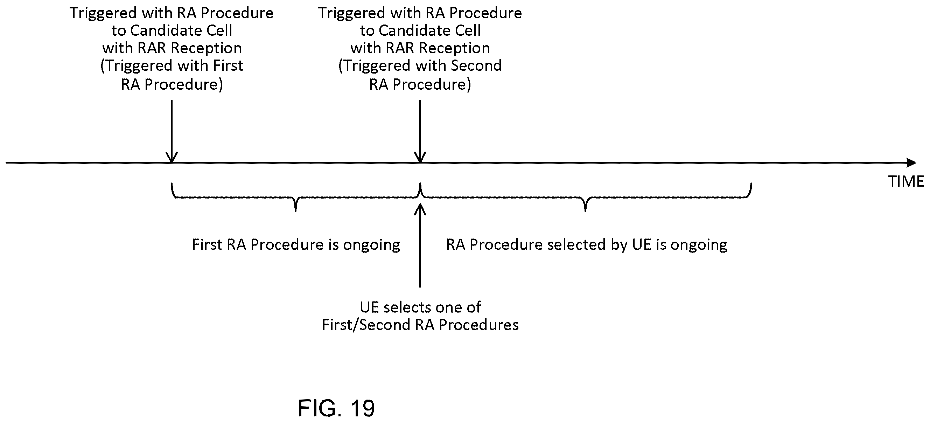

When an ongoing RA procedure is already present for a candidate cell/serving cell configured with RAR reception, and a new RA procedure with RAR reception is triggered, control may be performed so that one RA procedure is ongoing (see FIG. 19). In other words, control may be performed so that only one ongoing RA procedure is present at one time (for example, one RA procedure may be selected). The UE may autonomously judge/determine which RA procedure to perform (for example, whether to continue an ongoing RA procedure or initiate a new RA procedure) (UE implementation). Note that overlap between an RA procedure for a candidate cell/serving cell configured with RAR reception and an RA procedure for a candidate cell configured with non-RAR reception (or parallel RACH procedures) may be allowed.

FIG. 19 shows a case where a first RA procedure (for example, a PRACH) is triggered for a candidate cell/serving cell configured with RAR reception, and a new RA procedure (second RA procedure) for a candidate cell/serving cell configured with RAR reception is triggered during a period in which the first RA procedure is ongoing. In this case, any one of the RA procedures may be selected (for example, whether to continue the ongoing RA procedure or initiate the new RA procedure may be judged), and control may be performed so that only the selected RA procedure is ongoing.

This enables RA procedures with RAR reception (for example, a plurality of RAR receptions) to be controlled not to overlap each other, and thus an increase in UE processing load due to complexity of RA procedures can be suppressed. An RA procedure to be continued can be flexibly determined on the UE side.

### {Option 2-3}

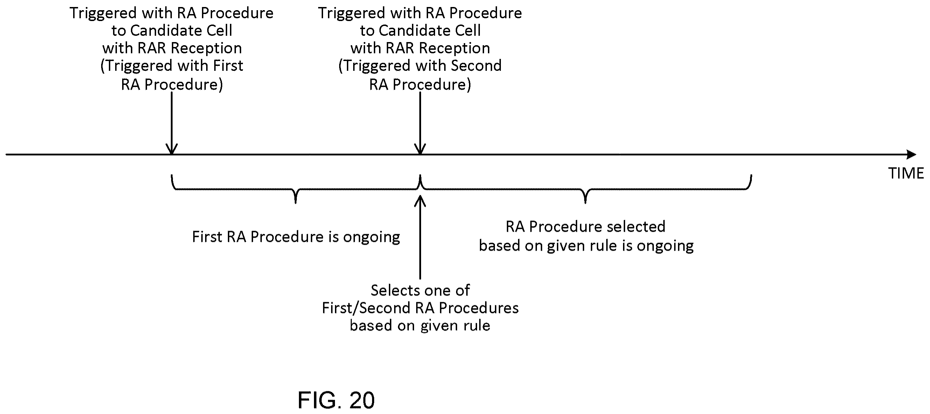

When an ongoing RA procedure is already present for a candidate cell/serving cell configured with RAR reception, and a new RA procedure with RAR reception is triggered, control may be performed so that one RA procedure is ongoing, based on a certain rule/condition (see FIG. 20). The UE may perform, based on the certain rule/condition, control so as to preferentially perform one RA procedure. Note that overlap between an RA procedure for a candidate cell/serving cell configured with RAR reception and an RA procedure for a candidate cell configured with non-RAR reception (or parallel RACH procedures) may be allowed.

FIG. 20 shows a case where a first RA procedure (for example, a PRACH) is triggered for a candidate cell/serving cell configured with RAR reception, and a new RA procedure (second RA procedure) for a candidate cell/serving cell configured with RAR reception is triggered during a period in which the first RA procedure is ongoing. In this case, one of the RA procedures may be selected based on the certain rule/condition (for example, whether to continue the ongoing RA procedure or initiate the new RA procedure may be judged), and control may be performed so that only the selected RA procedure is ongoing.

The certain rule/condition may be determined based on at least one (or a combination of two or more) of the order of indications of RA procedures, a cell type, a cell ID, or a TAG ID. For example, a later triggered/indicated RA procedure may be prioritized. An RA procedure for a serving cell may be prioritized over an RA procedure for a candidate cell. When RA procedures for respective candidate cells overlap each other, a candidate cell with a smaller cell ID or a smaller TAG ID may be prioritized. Note that the priority rule is not limited to this.

This enables RA procedures with RAR reception (for example, a plurality of RAR receptions) to be controlled not to overlap each other, and thus an increase in UE processing load due to complexity of RA procedures can be suppressed. An RA procedure to be continued can be appropriately determined based on a certain rule/condition.

In each option, a parallel with a new RACH procedure with non-RAR reception may be supported. A maximum number of RACH procedures possible to parallel each other may be defined in a specification or may be supported as a UE capability (for example, for each UE / each MAC entity / each frequency).

In a case where a RACH procedure with RAR reception and a new RACH procedure with non-RAR reception are caused to parallel each other, whether the parallel RA procedures are allowed/applied/enabled may be defined beforehand, may be configured by RRC, or may be determined based on a report of a UE capability.

### <Third Embodiment>

A third embodiment relates to an example of a control method in a case where parallel RACH procedures are supported for candidate cells configured with RAR reception (and a serving cell configured with RAR reception).

The third embodiment may be preferably applied in option 1-3/1-4 of the first embodiment. As a matter of course, application of the second embodiment is not limited to this.

In a case where a case is supported where one PDCCH order (or piece of DCI) performs one or more triggers/indications of a candidate cell configured with RAR reception, parallel RACH procedures (for example, RACH procedures with RAR reception) may be supported for candidate cells configured with RAR reception.

For example, a UE may judge the presence or absence of support of the parallel RACH procedures, based on the number of candidate cells possible to be indicated by one downlink control channel (for example, candidate cells with RAR reception). In other words, the UE may perform control so as to perform a separate operation in a case of parallel random access procedures, based on the number of candidate cells possible to be indicated by one downlink control channel (for example, candidate cells with RAR reception).

The presence or absence (or enabling/disabling) of application of the parallel RACH procedures may be configured/indicated by higher layer signaling / MAC CE / DCI or may be defined in a specification.

In a case where parallel RACH procedures (for example, RACH procedures with RAR reception) are supported for candidate cells configured with RAR reception, when two parallel RACH procedures are ongoing, operation for indicating, to the UE, which RA procedure RAR is for / intended for may be supported. In a case where parallel RACH procedures (for example, RACH procedures with RAR reception) are supported for candidate cells configured with RAR reception, at least one of options 3-1 to 3-2 below may be applied, for example.

### {Option 3-1}

In a case where RAR reception is performed in a specific cell (for example, an SpCell), a time period in which RAR windows overlap each other (on the overlapped RAR window time period) may be supported. When RAR reception is present during the time period in which RAR windows overlap each other, RAR may include a new indication of a candidate cell ID/TAG ID to indicate a relevant RA procedure/candidate cell.

This enables the UE to judge, even when a plurality of RA procedures (for example, RAR receptions) overlap each other, association between each RA procedure (or each RAR) and a candidate cell ID/TAG ID.

### {Option 3-2}

RAR reception for each candidate cell may be supported based on a CSS configuration of a certain type (for example, type 1). In this case, the CSS configuration of the certain type may implicitly indicate a relevant RA procedure/candidate cell. Association between a CSS and an RA procedure/candidate cell may be configured by a higher layer parameter or may be defined in a specification. This enables the UE to judge, even when a plurality of RA procedures (for example, RAR receptions) overlap each other, association between each RA procedure (or each RAR) and a candidate cell ID/TAG ID.

In option 3-1/3-2, some restrictions/conditions may further be considered for parallel RACH procedures (for example, RACH procedures with RAR reception). For example, a UE capability related to a maximum number of parallel RACH procedures may be introduced (for example, for each UE / each MAC entity / each frequency). The parallel RACH procedures may be restricted to those only between candidate cells (or only for respective candidate cells) or to those only between a candidate cell and a serving cell.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information (for example, random access procedure / PRACH transmission without RAR monitoring) for at least one of the embodiments above
- supporting of a RACH procedure for a candidate cell without RAR (for example, a candidate cell with non-RAR reception)
- supporting of parallel RA procedures

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of random access procedure/PRACH transmission without RAR monitoring, any RRC parameter for a specific release (for example, Rel. 18/19), or the like.

In a case where the UE does not support at least one of the specific UE capability or is not configured with the specific information, the UE may apply, for example, Rel-15/16 operation.

### (Supplementary Notes)

Regarding one embodiment of the present disclosure, the following supplementary notes of the invention will be given.

### {Supplementary Note 1-1}

A terminal including: a receiving section that receives a downlink control channel supporting triggering of a random access preamble (PRACH) for a plurality of candidate cells; and a control section that judges, based on the downlink control channel, one or more candidate cells for which transmission of the PRACH is performed, wherein the plurality of candidate cells include a first candidate cell with monitoring of a response signal (RAR) to the PRACH and a second candidate cell without monitoring of an RAR to the PRACH.

### {Supplementary Note 1-2}

The terminal according to supplementary note 1-1, wherein one downlink control channel being the downlink control channel indicates up to one candidate cell being the first candidate cell and one or more candidate cells each being the second candidate cell.

### {Supplementary Note 1-3}

The terminal according to supplementary note 1-1 or 1-2, wherein at least one of the first candidate cell or the second candidate cell is indicated by using different codepoints of a certain field of downlink control information transmitted by using the downlink control channel.

### {Supplementary Note 1-4}

The terminal according to any one of supplementary notes 1-1 to 1-3, wherein at least one of the first candidate cell or the second candidate cell is indicated by a bitmap included in downlink control information transmitted by using the downlink control channel.

### {Supplementary Note 2-1}

A terminal including: a receiving section that receives a downlink control channel supporting triggering of a random access preamble (PRACH) for a plurality of candidate cells; and a control section that judges, based on the downlink control channel, one or more candidate cells for which transmission of the PRACH is performed, wherein the plurality of candidate cells include a first candidate cell with monitoring of a response signal (RAR) to the PRACH and a second candidate cell without monitoring of an RAR to the PRACH, and the control section performs control so as to perform a separate operation in a case of parallel random access procedures, based on a number of the first candidate cells possible to be indicated by one downlink control channel being the downlink control channel.

### {Supplementary Note 2-2}

The terminal according to supplementary note 2-1, wherein in a case where the number of the first candidate cells possible to be indicated by the one downlink control channel is up to 1, the control section assumes that, during an ongoing random access procedure for the first candidate cell or serving cell with the RAR monitoring, a new random access procedure for another first candidate cell or serving cell with the RAR monitoring is not triggered.

### {Supplementary Note 2-3}

The terminal according to supplementary note 2-1 or 2-2, wherein in a case where the number of the first candidate cells possible to be indicated by the one downlink control channel is up to 1, when, during an ongoing random access procedure for the first candidate cell or serving cell with the RAR monitoring, a new random access procedure for another first candidate cell or serving cell with the RAR monitoring is triggered, the control section selects one random access procedure, based on a certain condition.

### {Supplementary Note 2-4}

The terminal according to any one of supplementary notes 2-1 to 2-3, wherein when the one downlink control channel supports indication of a plurality of the first candidate cells, and a plurality of random access procedures are ongoing, information related to association between an RAR and a random access procedure or information related to association between an RAR and a first candidate cell is received.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

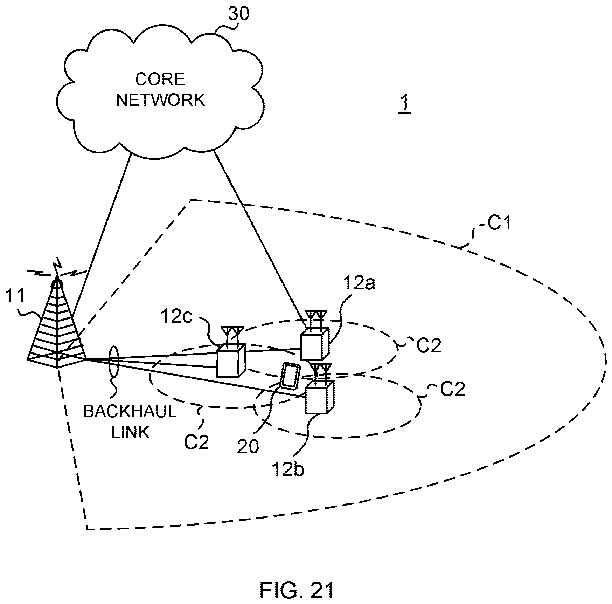

FIG. 21 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) or dual connectivity (DC) using a plurality of component carriers (CCs).

Each CC may be included in at least one of a first frequency band (Frequency Range 1 (FR1)) or a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) or frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) or the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH or the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), or scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

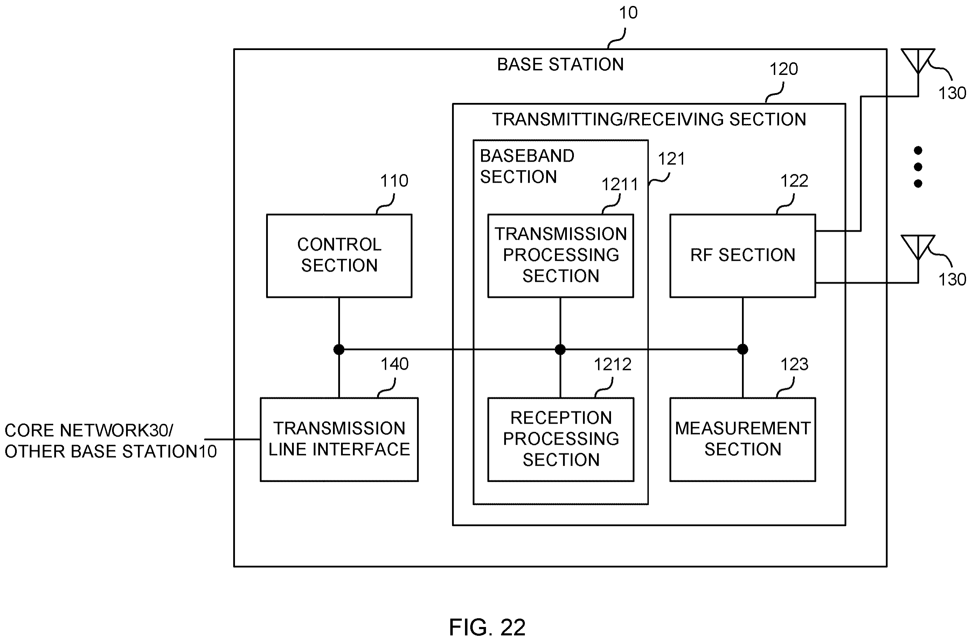

FIG. 22 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, or the communication path interface 140.

The transmitting/receiving section 120 may transmit a downlink control channel supporting triggering of a random access preamble (PRACH) for a plurality of candidate cells. The control section 110 may indicate, based on the downlink control channel, one or more candidate cells for which transmission of the PRACH is performed. The plurality of candidate cells may include a first candidate cell with monitoring of a response signal (RAR) to the PRACH and a second candidate cell without monitoring of an RAR to the PRACH.

The control section 110 may perform control so as to cause the terminal to perform a separate operation in a case of parallel random access procedures, based on a number of the first candidate cells possible to be indicated by one downlink control channel (or a certain higher layer parameter).

### (User Terminal)

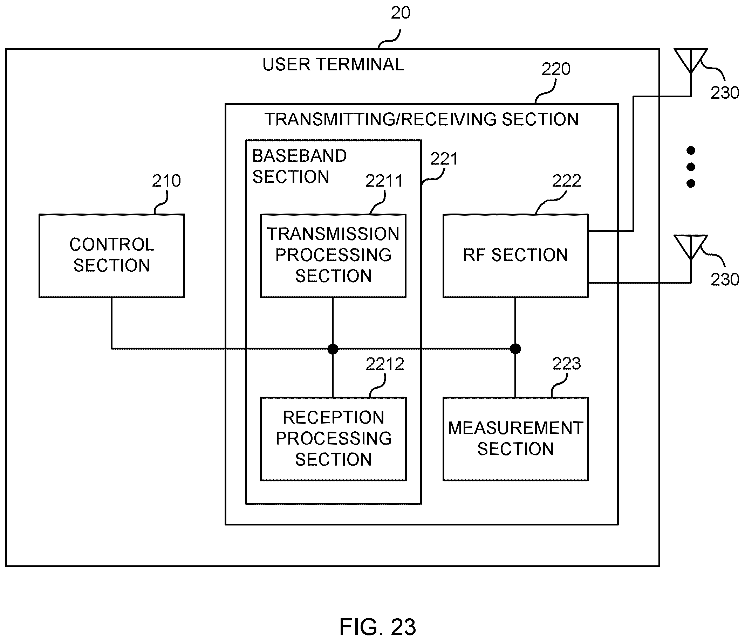

FIG. 23 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a channel measurement resource. The channel measurement resource may be, for example, a non-zero power (NZP) CSI-RS resource. The measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interpreted as a zero power (ZP) CSI-RS, and vice versa. Note that, in the present disclosure, CSI-RS, NZP CSI-RS, ZP CSI-RS, CSI-IM, CSI-SSB, and the like may be interchangeably interpreted.

Note that the transmitting section and the receiving section of the user terminal 20 in the present disclosure may be constituted with at least one of the transmitting/receiving section 220 or the transmitting/receiving antennas 230.

The transmitting/receiving section 220 may receive a downlink control channel supporting triggering of a random access preamble (PRACH) for a plurality of candidate cells. The control section 210 may judge, based on the downlink control channel, one or more candidate cells for which transmission of the PRACH is performed. The plurality of candidate cells may include a first candidate cell with monitoring of a response signal (RAR) to the PRACH and a second candidate cell without monitoring of an RAR to the PRACH.

One downlink control channel may indicate up to one first candidate cell and one or more second candidate cells. At least one of the first candidate cell or the second candidate cell may be indicated by using different codepoints of a certain field of downlink control information transmitted by using the downlink control channel. At least one of the first candidate cell or the second candidate cell may be indicated by a bitmap included in downlink control information transmitted by using the downlink control channel.

The control section 210 may perform control so as to perform a separate operation in a case of parallel random access procedures, based on a number of the first candidate cells possible to be indicated by one downlink control channel (or a certain higher layer parameter).

In a case where the number of the first candidate cells possible to be indicated by one downlink control channel is up to 1, the control section 210 may assume that, during an ongoing random access procedure for the first candidate cell or serving cell with the RAR monitoring, a new random access procedure for another first candidate cell or serving cell with the RAR monitoring is not triggered.

In a case where the number of the first candidate cells possible to be indicated by one downlink control channel is up to 1, the control section 210 may, when, during an ongoing random access procedure for the first candidate cell or serving cell with the RAR monitoring, a new random access procedure for another first candidate cell or serving cell with the RAR monitoring is triggered, select one random access procedure, based on a certain condition.

When one downlink control channel supports indication of a plurality of the first candidate cells, and a plurality of random access procedures are ongoing, information related to association between an RAR and a random access procedure or information related to association between an RAR and a first candidate cell may be received.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

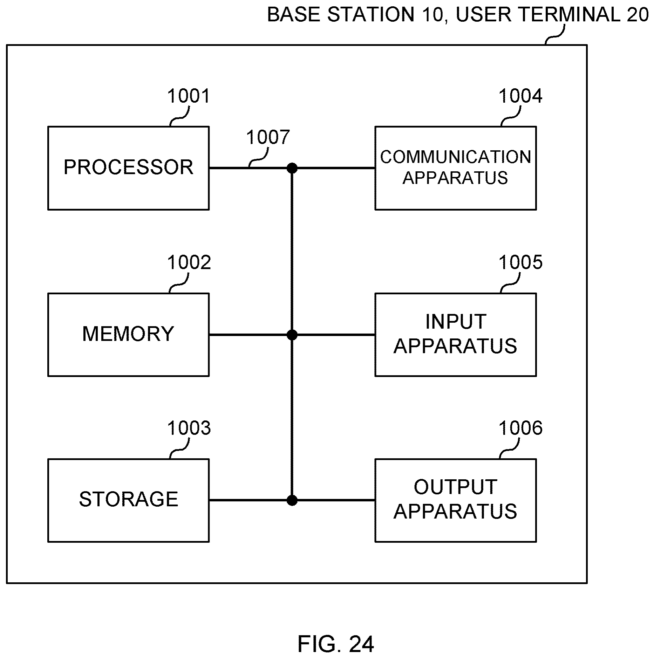

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

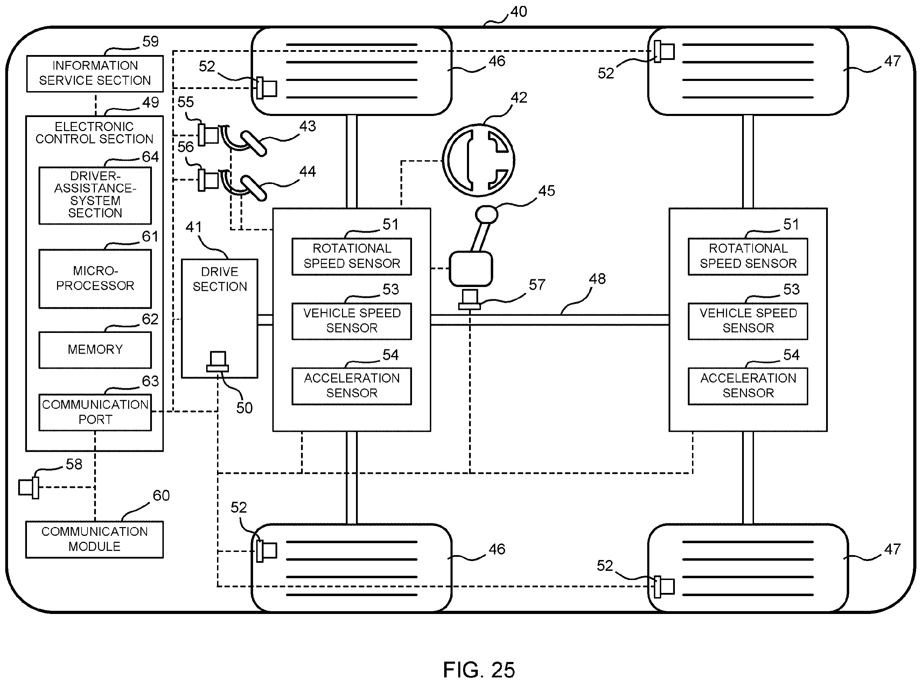

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a downlink control channel supporting triggering of a random access preamble (PRACH) for a plurality of candidate cells; and
a control section that judges, based on the downlink control channel, one or more candidate cells for which transmission of the PRACH is performed, wherein
the plurality of candidate cells include a first candidate cell with monitoring of a response signal (RAR) to the PRACH and a second candidate cell without monitoring of an RAR to the PRACH, and
the control section performs control to perform a separate operation in a case of parallel random access procedures, based on a number of the first candidate cells possible to be indicated by one downlink control channel being the downlink control channel.

2. The terminal according to claim 1, wherein
in a case where the number of the first candidate cells possible to be indicated by the one downlink control channel is up to 1, the control section assumes that, during an ongoing random access procedure for the first candidate cell or serving cell with the RAR monitoring, a new random access procedure for another first candidate cell or serving cell with the RAR monitoring is not triggered.

3. The terminal according to claim 1, wherein
in a case where the number of the first candidate cells possible to be indicated by the one downlink control channel is up to 1, when, during an ongoing random access procedure for the first candidate cell or serving cell with the RAR monitoring, a new random access procedure for another first candidate cell or serving cell with the RAR monitoring is triggered, the control section selects one random access procedure, based on a certain condition.

4. The terminal according to claim 1, wherein
when the one downlink control channel supports indication of a plurality of the first candidate cells, and a plurality of random access procedures are ongoing, information related to association between an RAR and a random access procedure or information related to association between an RAR and a first candidate cell is received.

5. A radio communication method for a terminal, the radio communication method comprising:
receiving a downlink control channel supporting triggering of a random access preamble (PRACH) for a plurality of candidate cells; and
judging, based on the downlink control channel, one or more candidate cells for which transmission of the PRACH is performed, wherein
the plurality of candidate cells include a first candidate cell with monitoring of a response signal (RAR) to the PRACH and a second candidate cell without monitoring of an RAR to the PRACH, and
the control section performs control to perform a separate operation in a case of parallel random access procedures, based on a number of the first candidate cells possible to be indicated by one downlink control channel being the downlink control channel.

6. A base station comprising:
a transmitting section that transmits, to a terminal, a downlink control channel supporting triggering of a random access preamble (PRACH) for a plurality of candidate cells; and
a control section that indicates, based on the downlink control channel, one or more candidate cells for which transmission of the PRACH is performed, wherein
the plurality of candidate cells include a first candidate cell with monitoring of a response signal (RAR) to the PRACH and a second candidate cell without monitoring of an RAR to the PRACH, and
the control section performs control to cause the terminal to perform a separate operation in a case of parallel random access procedures, based on a number of the first candidate cells possible to be indicated by one downlink control channel being the downlink control channel.
